Europäisches Patentamt

European Patent Office

Office européen des brevets

(19)

(11) Numéro de publication : **0 664 624 A2**

(12) # DEMANDE DE BREVET EUROPEEN

(21) Numéro de dépôt : **95400023.8**

(22) Date de dépôt : **05.01.95**

(51) Int. Cl.⁶ : **H04J 14/08, H04Q 11/00**

(30) Priorité : **07.01.94 FR 9400114**

(43) Date de publication de la demande :
**26.07.95 Bulletin 95/30**

(84) Etats contractants désignés :
**DE FR GB IT**

(71) Demandeur : **FRANCE TELECOM**
**Etablissement autonome de droit public,**
**6, Place d'Alleray**
**F-75015 Paris (FR)**

(72) Inventeur : **Auffret, René**
**48 Kernu - Louannec**
**F-22700 Perros Guirec (FR)**

(74) Mandataire : **Dubois-Chabert, Guy et al**
**Société de Protection des Inventions**
**25, rue de Ponthieu**
**F-75008 Paris (FR)**

(54) **Procédé et dispositif de transmission et d'aiguillage de paquets dans un réseau optique.**

(57) La présente invention concerne un procédé de transmission et d'aiguillage de paquets dans un réseau optique dans lequel on réalise un multiplexage temporel synchrone, les paquets étant émis à une même vitesse, et le débit étant déterminé par le temps d'occupation de la ligne.

La présente invention concerne également un dispositif de transmission et d'aiguillage de paquets dans un réseau optique.

FIG.1A

FIG.1B

EP 0 664 624 A2

EP 0 664 624 A2

Domaine technique

La présente invention concerne un procédé et un dispositif de transmission et d'aiguillage de paquets dans un réseau optique.

Etat de la technique antérieure

La fibre optique monomode pénètre de plus en plus de réseaux des télécommunications. A moyen terme, il est vraisemblable que l'usager aura l'accès direct à la fibre monomode. Dès lors, la continuité de capacité du conduit entre deux abonnés quelconques sera effective. Les coûts des émetteurs et des récepteurs optiques dépendent peu du débit d'information. On peut donc envisager de moduler les sources à très haut débit et de fixer la capacité d'un canal par le temps d'occupation déterminé par le rapport entre la durée du paquet et le temps séparant deux paquets successifs.

Mais l'introduction de l'optique aux fonctions du réseau se heurte aujourd'hui à la structure des signaux temporels ATM et SDH, où ces fonctions s'accompagnent d'organes de traitement et de gestion très élaborés et hors de portée de l'optique.

Un article de J.P. Coudreuse, G. Pays et M. Trouvat intitulé "La technique temporelle asynchrone" (Commutation et Transmission, numéro 3, 1990) décrit la technique temporelle asynchrone (ATM pour "Asynchronous Transfer Mode") qui est définie pour répondre à trois critères: technique numérique, haut débit et souplesse. C'est une technique hybride entre la commutation de circuits dont elle garde la simplicité (gage des très hauts débits) et la commutation de paquets dont elle prend la souplesse. Elle est l'aboutissement des diverses évolutions intermédiaires et convergentes qui ont vu le jour dans les dernières années : commutation rapide de circuits pour tenter de résoudre la commutation de rafales d'informations et commutation rapide de paquets pour augmenter le débit traité en simplifiant les couches protocolaires (commutation de trames, relayage de trame).

Cette difficulté d'introduction de l'optique aux autres fonctions du réseau résulte paradoxalement de son succès en transmission. En effet, la réduction du coût de la voie téléphonique chaque fois que l'on monte en débit, jointe à la très grande bande passante de la fibre, ont poussé le développement de systèmes de transmission toujours plus rapides. Il est pourtant une autre approche pour augmenter la capacité d'un réseau optique, celle qui privilégie le parallélisme de circuits dans un même conduit optique par multiplexage de longueurs d'ondes. Cette approche toujours repoussée en transmission pour des raisons de coût commence à voir le jour pour les systèmes à détection directe aux débits de 10 Gbit/s voire au-delà, où l'on atteint les limites de la fibre monomode.

Un article de H. Paciullo intitulé "Les réseaux optiques multicolores" (Echo des Recherches, numéro 146, 4ème trimestre 1991) définit le concept de réseaux multicolores. Ces réseaux multicolores se caractérisent essentiellement par le fait qu'ils mettent en oeuvre un grand nombre de longueurs d'ondes, ou fréquences optiques, pour la réalisation de réseaux de communication. Ce concept a pu être développé grâce à l'émergence de la fibre optique monomode qui présente une bande passante très importante (plusieurs milliers de gigahertz dans la troisième fenêtre autour de 1,5 $\mu$m) ainsi que par le développement en laboratoire de nouveaux composants optiques et optoélectroniques. L'originalité principale de ces techniques réside non seulement dans l'aspect quantitatif (capacité des réseaux sans commune mesure avec ceux existant actuellement), mais également dans le fait qu'ici la longueur d'onde peut être considérée comme un élément de réseau et que, donc, des fonctions de gestion et d'exploitation de réseau peuvent être directement appliquées au niveau de l'ensemble des longueurs d'ondes.

Les réseaux optiques multicolores offrent une solution originale aux besoins sans cesse croissants des réseaux en matière de capacité. Cependant, ils nécessitent des composants optiques sophistiqués dont certains en sont encore au stade de la recherche, c'est pourquoi ce type de réseau n'est pas à présent exploité commercialement.

Ces arguments de coût sont à reconsidérer dès lors que l'on envisage l'organisation complète d'un réseau. Les systèmes à détection cohérente ont conduit à des propositions d'organisation de réseau multicolore. Cependant, l'immaturité technologique en freine la réalisation.

La Présente invention a pour objet une nouvelle organisation des fonctions d'un réseau optique permettant de palier ces différents inconvénients.

Exposé de l'invention

La présente invention propose un procédé de transmission et d'aiguillage de paquets dans un réseau optique, caractérisé en ce que l'on réalise un multiplexage temporel synchrone, les paquets étant émis à une

2

même vitesse, et le débit étant déterminé par le temps d'occupation de la ligne, et en ce que l'affectation des fenêtres temporelles se fait à partir d'un organe central, de façon à ce que tous les paquets se présentent aux bons instants au niveau d'une matrice de commutation.

L'invention concerne également un procédé de transmission et d'aiguillage dans lequel on associe le parallélisme du multiplexage multicolore au multiplexage temporel synchrone, les paquets synchrones étant organisés dans une trame en "matrice" formée en abscisse des différents instants d'échantillonnage et en ordonnée des différentes longueurs d'ondes représentant le niveau de parallélisme du paquet, chacun étant repéré dans ladite matrice par sa fenêtre d'échantillonnage et son niveau de parallélisme.

Dans le procédé de l'invention on réalise les trois opérations suivantes:
- la coloration des affluents par la transposition optique ;
- le mélange des canaux ;
- la sélection des canaux par filtrage.

Pour réaliser la coloration des affluents, une fonction de transposition permet de transférer optiquement les informations d'une longueur d'onde à une autre en utilisant l'une des techniques suivantes :
- décalage de la fréquence d'émission d'un laser ;
- mélange à quatre ondes dans les amplificateurs semi-conducteurs ;
- non-linéarité du gain dans les amplificateurs semi-conducteurs ;
- commutation de gain dans les amplificateurs semi-conducteurs dans une boucle optique : synthétiseur/transpositeur.

Le procédé de transmission de l'invention ainsi défini présente de nombreux avantages, et notamment :
- il permet l'accès, en tout endroit du réseau, à un canal quelconque parmi N;
- il est transparent à tout format numérique (dans le cas d'une transposition par saturation du gain) ;
- il présente une capacité potentielle qui dépend uniquement du débit des affluents, à condition que la taille du réseau ait été définie, en tenant compte des performances en transmission pour le débit maximum de ces affluents ;
- il peut admettre simultanément des affluents à des débits différents ;
- il est adapté à une évolution vers le cohérent.

L'invention concerne également un dispositif de transmission et d'aiguillage de paquets dans un réseau optique qui peut comporter un transpositeur qui comprend les éléments suivants :
- N coupleurs optiques (2 vers 1), l'une des branches de chaque coupleur recevant un affluent à la longueur d'onde $\lambda A$, l'autre une émission continue d'un laser de "coloration" à $\lambda i$, suivis de N amplificateurs optiques semi-conducteurs, en sortie desquels on obtient le signal sur la longueur d'onde $\lambda A$ et son complément sur la longueur d'onde $\lambda i$ ;
- un mélangeur N vers 1 ;
- une fibre optique ;
- un coupleur 1 vers N comportant sur chacune de ses sorties un filtre rejecteur qui élimine la longueur d'onde $\lambda A$.

Avantageusement le dispositif de l'invention comprend des synthétiseurs/transpositeur permettant de réaliser les deux fonctions d'un laser accordable et d'un amplificateur transpositeur Chacun de ceux-ci comprend un amplificateur optique semi-conducteur dont la réflectivité résiduelle des faces a été volontairement maintenue à une valeur telle qu'elle engendre une modulation du spectre de l'émission spontanée, placé dans une boucle en fibre optique incluant un isolateur optique et un filtre Fabry Perot accordable, cet ensemble formant un laser qui émet une longueur d'onde $\lambda i (i=1$ à N) chaque fois que le filtre est en coïncidence avec l'une quelconque de résonances de l'émission spontanée.

Dans une réalisation avantageuse le dispositif de l'invention comprend une mémoire tampon à laquelle est relié un laser à l'alternat par une connexion lecture et une connexion écriture, ce laser étant relié également par l'intermédiaire d'une fibre optique à un étage de transposition, comprenant un amplificateur et un laser accordable $64\lambda$, et à un autre laser. Un module de sélection de la fenêtre temporelle Fi et de l'affectation $\lambda j$ est relié à cet étage de transposition et à ce laser.

## Brève description des dessins

- Les figures 1A et 1B illustrent la structure et le fonctionnement d'un multiplexeur temporel ;
- les figures 2A, 2B et 2C illustrent la structure et le fonctionnement d'un démultiplexeur ;
- les figures 3A, 3B et 3C illustrent la structure et le fonctionnement d'un diffuseur ;
- les figures 4A, 4B et 4C illustrent la structure et le fonctionnement d'un démultiplexeur reconfigurable ;
- les figures 5A et 5B illustrent la structure et le fonctionnement d'un répartiteur brasseur ;
- la figure 6 illustre un brasseur comprenant quatre modules tels que représentés sur la figure 5A ;

- la figure 7 illustre la structure d'un réseau élémentaire 4 vers 1 ;
- les figures 8A et 8B illustrent la structure et le fonctionnement d'un synthétiseur/transpositeur ;
- les figures 9A et 9B illustrent la structure et le fonctionnement d'un module d'insertion/extraction ;
- la figure 10 illustre l'architecture d'un réseau de 64 canaux ;
- la figure 11 illustre la matrice d'une trame associant temporel et parallélisme ;
- la figure 12 illustre un circuit de mise en forme des affluents ;
- la figure 13 illustre une matrice 16 x 16.

Exposé détaillé de modes de réalisation

Dans un premier mode de réalisation l'invention concerne une organisation basée sur un multiplexage temporel synchrone pour des débits de 2 à 140 Bit/s. Dans un tel multiplexage temporel synchrone, les paquets sont émis à la même vitesse et le débit est déterminé par le temps d'occupation de la ligne.

Compte tenu de la grande capacité de transmission d'une fibre optique, on fait l'hypothèse que tous les émetteurs et récepteurs optiques fonctionnent au débit 140 MBit/s. Le débit d'un canal est déterminé par le produit du nombre d'impulsions contenues dans le paquet par la fréquence d'occurrence de ces derniers. Dans le cas du 140 Mbit/s retenu comme débit "plein", les paquets sont jointifs. Le rapport K entre la durée d'un paquet et l'intervalle entre deux paquets successifs varie suivant les débits considérés: 2 Mbit/s: K = 1/64, 8 Mbit/s : K = 1/16, 34 Mbit/s : k = 1/4, 140 Mbit/s : k=1. La durée du paquet dépend de la capacité de la mémoire optique ou des retards optiques que l'on sait générer.

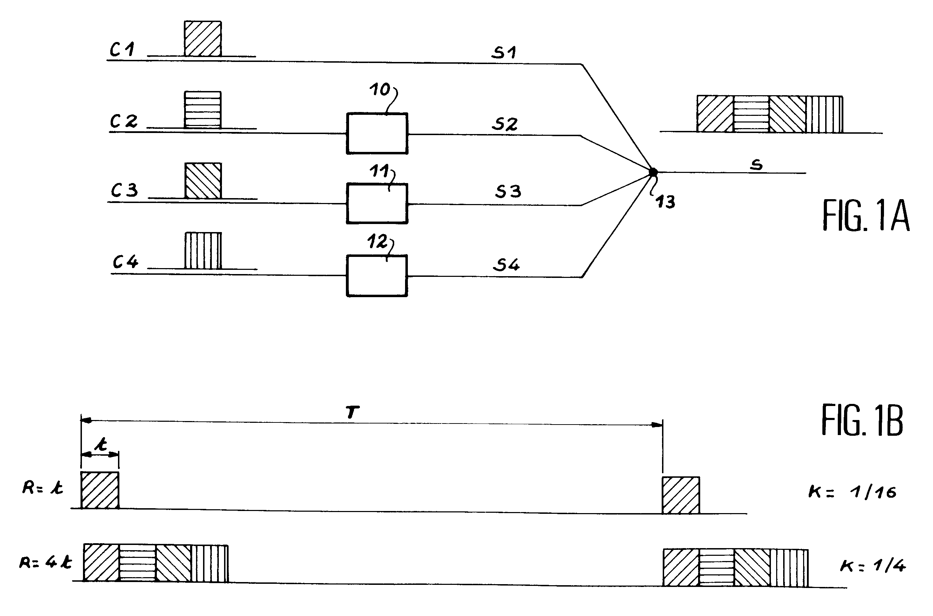

La figure 1A illustre la structure d'un multiplexeur temporel, 4 vers 1, qui est constitué de lignes à retards 10, 11, 12 à fibre monomode couplées à un mélangeur optique 4 vers 1, 3. Les retards affectant trois des quatre branches du coupleur sont respectivement: R (ligne 10), 2R (ligne 11), 3R (ligne 12). Le retard R correspond à la durée (t) du paquet élémentaire. Avec les signaux d'entrée C1, C2, C3 et C4 on obtient des signaux retardés S1, S2, S3 et S4, et un signal de sortie S.

La figure 1B illustre l'occupation de la fibre, dans le cas où R = t et dans le cas où R = 4t.

Dans l'exemple représenté :

R = t dans le cas du multiplexage 2 vers 8 Mbit/s

R = 4t dans le cas du multiplexage 8 vers 34 Mbit/s.

Pour les fonctions de démultiplexage, diffusion répartition brassage, la fonction optique de commutation peut être réalisée soit par un commutateur optique en niobate de lithium ou par un amplificateur optique semiconducteur utilisé en modulateur, dans ce cas la commande est électrique. On peut utiliser aussi des portes optiques logiques (ET) adressables optiquement, c'est ce type de composant qui est retenu pour la description des fonctions dans la suite de la description.

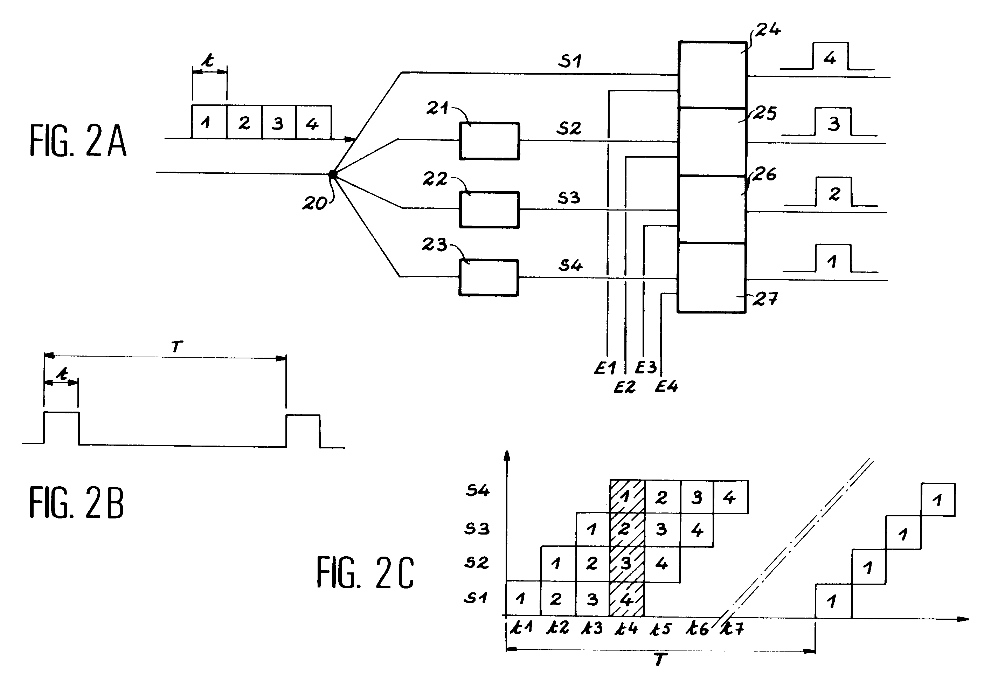

Comme représenté sur la figure 2A le démultiplexeur se compose d'un coupleur 1 vers 4, 20, d'un sérialisateur constitué de lignes à retards 21, 22 et 23 et de quatre portes optiques logiques 24, 25, 26 et 27. Le coupleur et le sérialisateur sont identiques à ceux décrits dans la fonction multiplexage.

Les portes optiques logiques reçoivent les signaux Si issus du sérialisateur et les signaux optiques de commande Ei. Dans le cas présenté à la figure 2A, ces portes sont adressées simultanément à l'instant $t_4$ comme représenté sur le diagramme des temps illustré à la figure 2C. La figure 2B représente les impulsions de commande des entrées Ei des portes optiques à l'instant $t_4$.

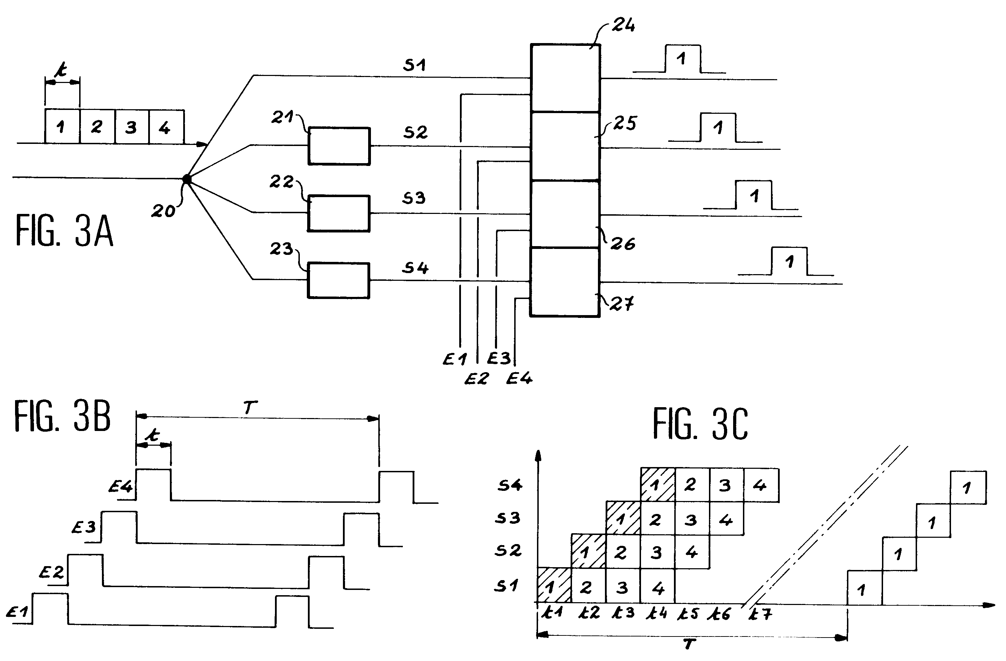

Lorsque l'on supprime le sérialisateur, tous les signaux aux entrées Si sont en phase. Si comme dans le cas précédent tous les signaux de commande Ei sont aussi en phase, on réalise une fonction "diffuseur", chaque porte véhiculant le même paquet. Le numéro de ce paquet dépend de l'instant où sont appliquées les commandes Ei, comme représenté sur les figures 3A, 3B et 3C correspondant aux figures 2A, 2B et 2C.

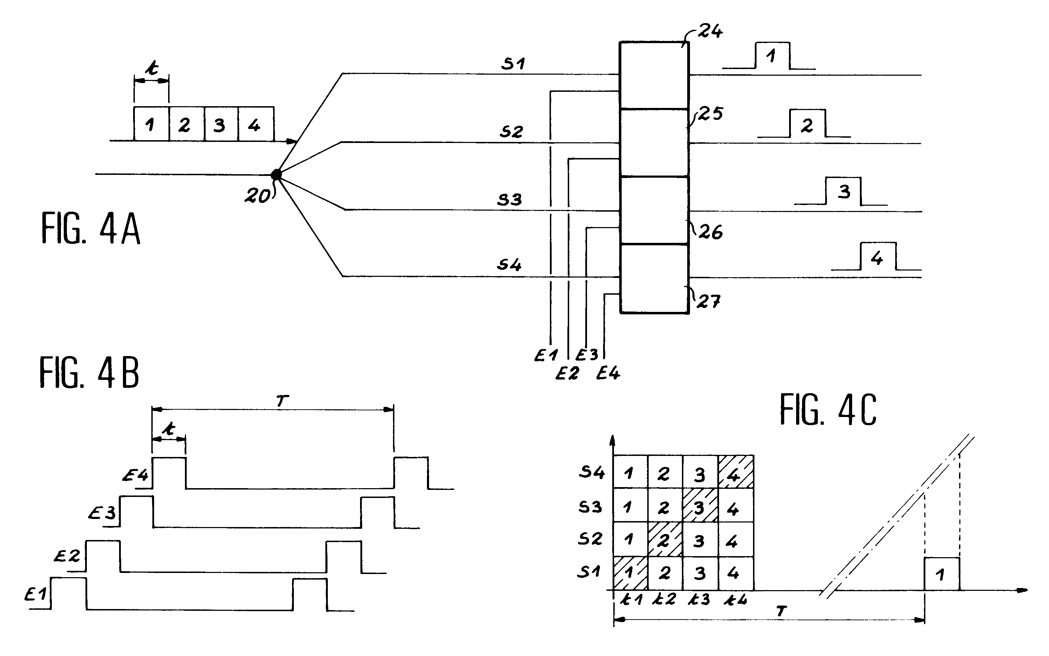

Si maintenant on gère séparément les instants d'adressage des entrées Ei, le système se comporte comme un démultiplexeur reconfigurable, comme représenté aux figures 4A, 4B et 4C. L'adressage variable dans le temps des entrées Ei offre l'avantage supplémentaire de conserver les positions temporelles des paquets.

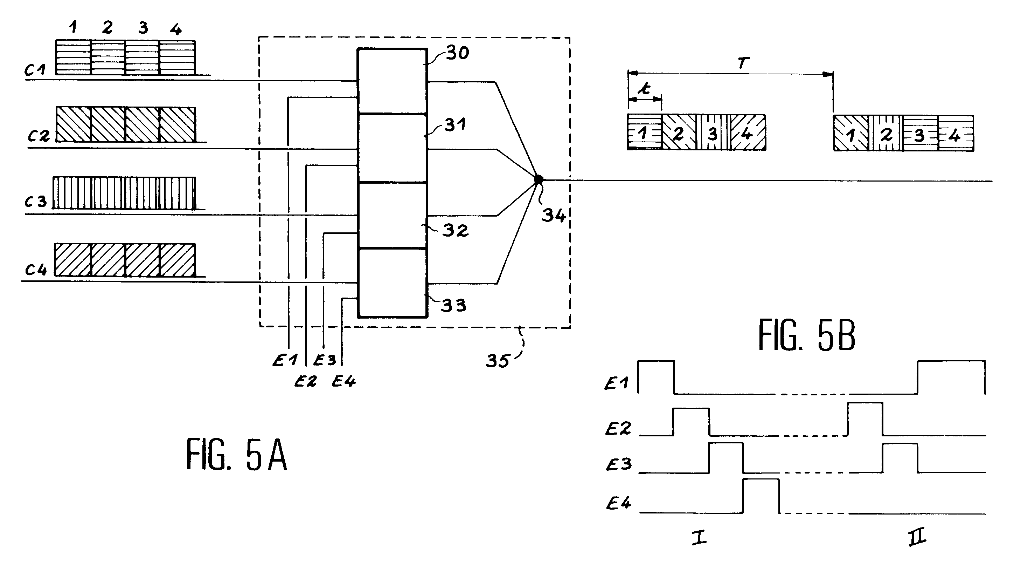

La figure 5A représente la structure élémentaire d'un répartiteur brasseur constitué de quatre portes logiques 30, 31, 32, 33 et d'un mélangeur 4 vers 1, 34. La configuration des paquets en sortie, associée au diagramme des temps des impulsions appliquées aux entrées Ei, représentée à la figure 5B, illustre le comportement de cette fonction élémentaire. Pour pouvoir brasser n'importe quel paquet de n'importe quel train entrant, il faut non seulement gérer les retards des impulsions de commande Ei (diagramme du temps I) mais également leurs durées (diagramme du temps II).

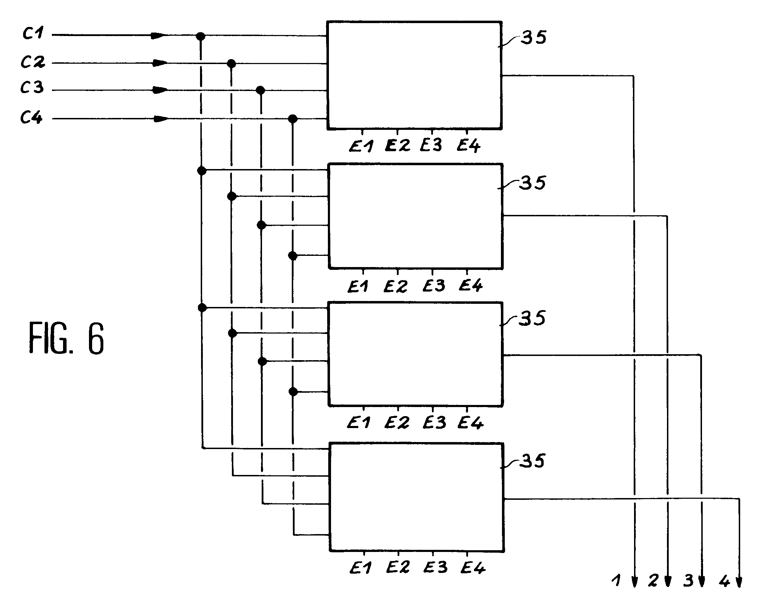

Pour pouvoir brasser n'importe quel paquet élémentaire vers l'un quelconque des quatre trains sortants, il faut organiser, de la manière illustrée à la figure 6, quatre fonctions élémentaires 35 telles que représentées à la figure 5A.

La disponibilité de sources et de filtres optiques accordables jointe à l'émergence des fonctions de transposition permet d'envisager l'association du parallélisme du multiplexage multicolore au temporel synchrone.

Dans un second mode de réalisation l'invention concerne une organisation basée sur un multiplexage temporel synchrone associé à un multiplexage multicolore ou multiplexage en longueurs d'ondes. On obtient des paquets synchrones organisés dans une trame en "matrice", avec :

- en abscisse: les instants d'échantillonnages ;
- en ordonnée : les longueurs d'ondes représentant le niveau de parallélisme du paquet.

Chaque paquet est ainsi repéré dans la "matrice trame" par sa fenêtre d'échantillonnage et son niveau de parallélisme.

Les fonctions optiques, qui vont être décrites à présent, permettent de discriminer les niveaux de parallélisme (les longueurs d'ondes); bien qu'appliquées à du routage de trains, elles s'appliquent aussi au routage de paquets colorés.

Dans une telle organisation, on cherche à conserver la transparence de l'optique au format des signaux et l'accès direct au canal élémentaire. Pour illustrer le propos et définir un peigne de longueur d'onde, on prend par analogie le plan de multiplexage numérique PDH ("Plesiochrone Digital Hierarchy") et SDH. La capacité équivalente d'un réseau multicolore s'exprime par le produit du nombre de canaux (nombre $\lambda$) par le débit élémentaire.

PDH 2 Mb/s $\to$ 1$\lambda$      8 Mb/s $\to$ 4$\lambda$      34 Mb/s $\to$ 16$\lambda$      140 Mb/s $\to$ 64$\lambda$      SDH 155 Mb/s $\to$ 1$\lambda$      622 Mb/s $\to$ 4$\lambda$      2550 Mb/s $\to$ 16$\lambda$

Si l'on veut garder de la souplesse à l'organisation du réseau, en particulier sa taille, il faut préserver l'utilisation d'amplificateur optique en ligne. La fenêtre optique disponible est dès lors limitée par sa bande passante, elle est de 32 nm pour un amplificateur à fibre. Le tableau ci-dessous propose une répartition des longueurs d'ondes dans cette fenêtre.

| Niveaux du multiplex | Nombre de $\lambda$ | Espacement | Encombrement spectral |
|---|---|---|---|
| 1 | 4 | 8 nm | 24 nm |
| 2 | 16 | 2 nm | 30 nm |
| 3 | 64 | 0,5 nm | 31,4 nm |
| 4 | 256 | 0,125 nm | 31,875 nm |

Le niveau de multiplexage optique d'ordre 4 n'est guère réaliste dans l'hypothèse de la détection directe associée au filtrage optique. L'architecture d'un tel réseau suppose trois opérations principales: la coloration des affluents par transposition optique, le mélange des canaux et leur sélection par filtrage.

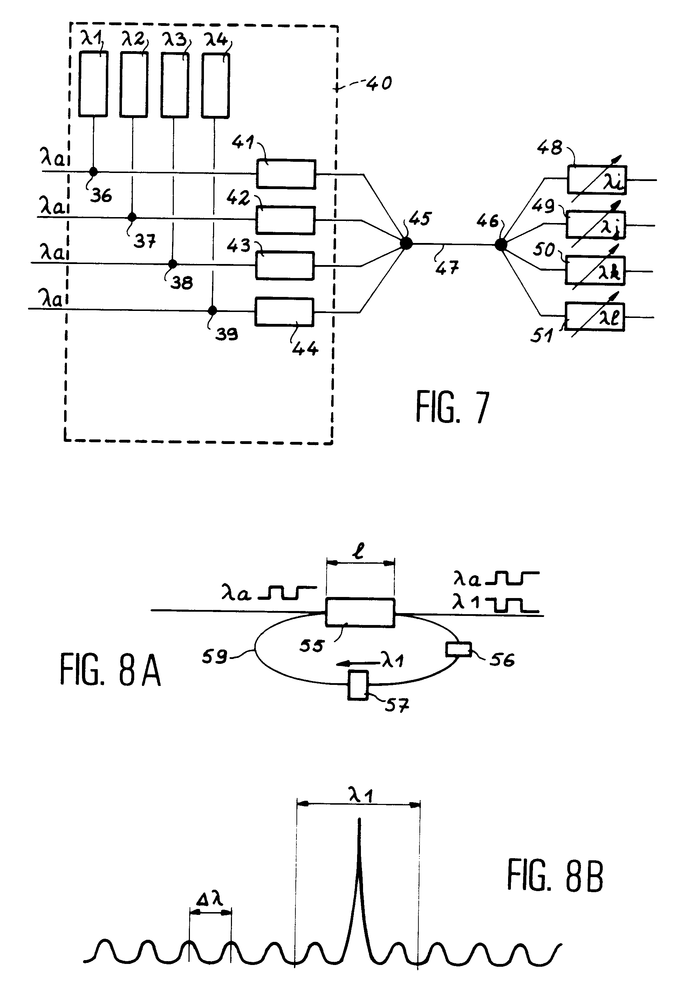

La figure 7 illustre la structure d'un réseau élémentaire 4 vers 1. Le module 40 est un module de coloration des affluents de longueurs d'ondes $\lambda$ a, avec des longueurs d'ondes $\lambda_1$, $\lambda_2$, $\lambda_3$ et $\lambda_4$. Il comporte un coupleur 36, 37, 38 ou 39 suivi d'un amplificateur 41, 42, 43 ou 44 sur chaque voie, qui sont reliés à un mélangeur 4 vers 1, 45. Ce mélangeur 45 est relié à un coupleur 1 vers 4, 46 au travers d'une fibre optique 47. Les sorties de ce coupleur sont reliées à quatre filtres sélecteurs 48, 49, 50, 51.

Cette architecture élémentaire peut aussi remplir la fonction de répartiteur puisque chaque filtre accordable peut choisir l'un quelconque des quatre canaux incidents.

Pour réaliser la coloration des affluents, la fonction de transposition permet de transférer optiquement les informations d'une longueur d'onde à une autre. Plusieurs techniques sont possibles par:

- décalage de la fréquence d'émission d'un laser;
- mélange à quatre ondes dans les amplificateurs semi-conducteurs;
- non-linéarité du gain dans les amplificateurs semi-conducteurs;
- commutation de gain dans les amplificateurs semi-conducteurs dans une boucle optique: synthétiseur/transpositeur.

Ces deux dernières techniques paraissent les plus matures.

On peut ainsi réaliser la transposition optique par saturation du gain dans les amplificateurs semi-conducteurs. Le transpositeur tel que représenté à la figure 7 comprend notamment les éléments suivants:

- quatre coupleurs optiques 2 vers 1 (36, 37, 38, 39) : l'une des branches de chaque coupleur reçoit l'affluent à $\lambda$A, l'autre, l'émission continue du laser de "coloration" à $\lambda$i. Les signaux de sortie sont injectés dans des amplificateurs optiques semi-conducteurs (41, 42, 43, 44). En sortie on obtient le signal sur la longueur d'onde $\lambda$A et son complément sur la longueur d'onde $\lambda$i ;
- quatre filtres optiques réjecteurs (48, 49, 50, 51): éliminent la longueur d'onde $\lambda$A.

Pour les lasers de coloration, on utilise des lasers accordables en longueur d'onde pour garder de la souplesse à l'ajustage du λi.

On peut également utiliser un synthétiseur/transpositeur.

Dans le transpositeur décrit ci-dessus la fonction de coloration suppose deux composants semi-conducteurs (SC) distincts : le laser accordable et l'amplificateur transpositeur.

Dans le cas du synthétiseur/transpositeur, les deux fonctions sont réalisées par l'amplificateur 55 représenté à la figure 8A. Il comprend également un isolateur optique 56 et un filtre accordable 57 à la fréquence Fa.

La figure 8B illustre le spectre optique de ce dispositif

Le synthétiseur optique est constitué d'un amplificateur optique semi-conducteur 55 dont la réflectivité résiduelle des faces a été volontairement maintenue à une valeur telle, qu'elle engendre une modulation du spectre de l'émission spontanée. L'intervalle $\Delta\lambda$ entre deux résonances successives est fixé par les caractéristiques de l'amplificateur. $\Delta\lambda = \lambda^2/2nl$ (n : indice effectif de groupe, I: longueur du composant). Cet amplificateur 55 est placé dans une boucle en fibre optique 59 incluant un isolateur optique 56 et un filtre Fabry Perot accordable 57. Cet ensemble forme un laser qui émet une longueur d'onde λi (i= 1 à N) chaque fois que le filtre 57 est en coïncidence avec l'une quelconque des résonances de l'émission spontanée. L'accordabilité du filtre 57 permet de parcourir le peigne de longueurs d'ondes dans toute la bande de gain de l'amplificateur 55.

Le nombre N de λ = Intervalle spectral libre du filtre/$\Delta\lambda$.

L'isolateur optique 56 isole l'amplificateur 55 des réflexions du filtre 57 et fixe le sens de rotation de la lumière dans la boucle.

Dans le transpositeur optique représenté à la figure 7, un signal affluent λA modulé en amplitude est injecté par un coupleur optique dans le synthétiseur optique. Le signal module le gain de l'amplificateur et le niveau de la puissance émise à la longueur d'onde λi par le synthétiseur. L'information entrante est ainsi transposée sur la longueur d'onde λi.

La vitesse de modulation du signal injectée λA est limitée par le gain et la taille de la boucle du synthétiseur. Pour des dimensions de quelques centimètres on peut atteindre des débits de l'ordre de la centaine de MHz.

Le mélangeur 45 est constitué d'un coupleur optique 4 vers 1 par étage de multiplexage.

Le sélecteur est constitué d'un coupleur 1 vers N, 46 (N = $2^{2.K}$, K niveau de multiplexage), sur chacune des branches de sortie, un filtre optique accordable permet de sélectionner un canal parmi N.

Dans le cas de la fonction insertion-extraction où l'on ne souhaite pas démultiplexer et remultiplexer l'ensemble des canaux, il faut un composant capable de prélever et d'injecter un quelconque canal parmi N sans perturber les N-1 canaux en transit.

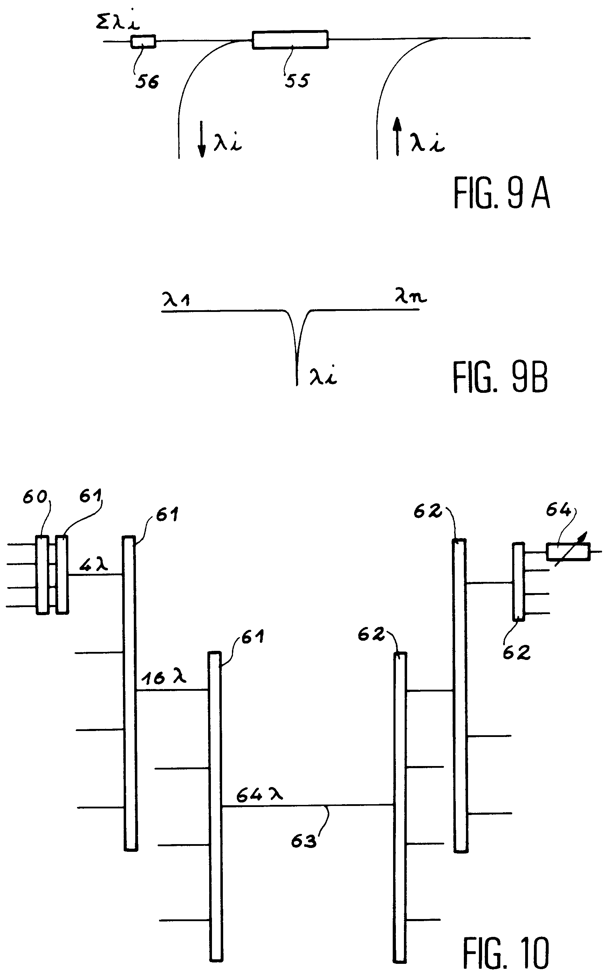

La figure 9A illustre l'architecture d'un tel composant réalisable à partir de filtre réjecteur fixe 55 et d'un isolateur optique 56.

La figure 9B illustre la fonction de transfert du filtre réjecteur. L'adressage des canaux se fait par émission ou filtrage dynamique. Son choix dépend pour une large part de l'accordabilité comparée des sources et du filtre.

La figure 10 illustre l'architecture d'un réseau de 64 canaux. Elle comprend un module de coloration 60, un certain nombre de mélangeurs 1 vers 4, 61, une fibre optique 63, des coupleurs 62 et des filtres 64.

Dans l'hypothèse fixée précédemment d'un débit déterminé par l'occupation temporelle du conduit, le nombre de canaux 2 Mbit/s dans le débit plein 140 Mbit/s est de 64, chacun d'eux étant repéré par l'instant d'échantillonnage $t_j$ (j = 1 à 64). Si on prend comme bande optique de transmission celle des amplificateurs à fibre dopée, soit 32 nm, le tableau ci-dessous montre qu'un parallélisme de niveau 64 est accessible.

|  | Espacement | Encombrement spectral |
|---|---|---|
| 4 λ | 8 nm | 24 nm |
| 16 λ | 2 nm | 30 nm |
| 64 λ | 0,5 nm | 31,5 nm |
| 256 λ | 0,125 nm | 31 865 nm |

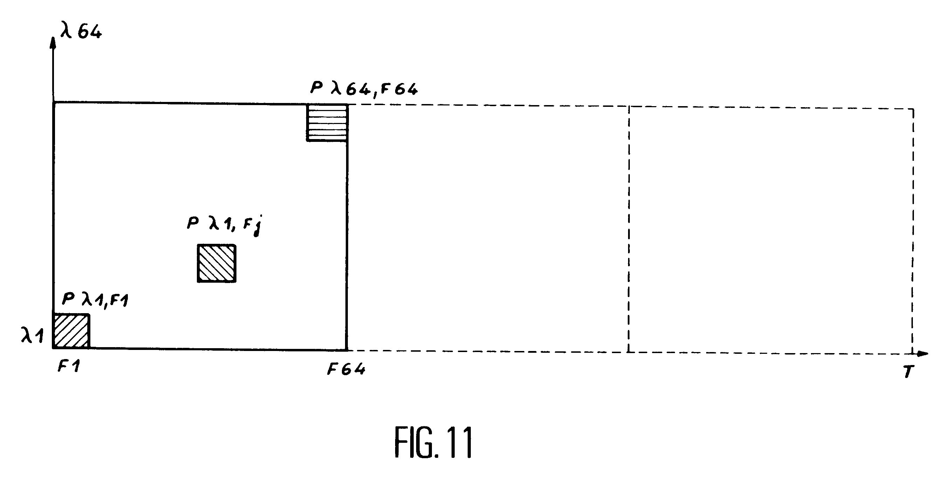

Dans un tel réseau, un canal quelconque 2 Mbit/s est repéré par λi et sa fenêtre temporelle $t_j$ (t représentant la durée du paquet), comme représenté sur la figure 11.

La capacité du réseau est le produit du débit élémentaire par le nombre d'instant tj (64) et le nombre de λi (64), soit :

$$C = 64 \times 64 \times 2 \text{ Mbit/s} = 8\,192 \text{ Mbit/s}$$

Pour assurer le synchronisme des fenêtres temporelles affectées aux affluents, il faut adresser la commande de lecture de mémoires tampons à partir de l'organe central qui gère le synchronisme. La disponibilité d'intervalle de temps (T) important entre l'émission de deux paquets successifs, permet de concevoir un fonctionnement à l'alternat du laser affluent distant. Ce laser fonctionne alors tantôt en récepteur des signaux émis par l'organe central vers la mémoire tampon, tantôt en émetteur des paquets d'information.

Les signaux de commande émis par l'organe central de gestion déterminent la position temporelle de la fenêtre d'émission. Lorsque l'affluent est formaté en paquets et affecté à sa fenêtre temporelle, il traverse un étage de coloration.

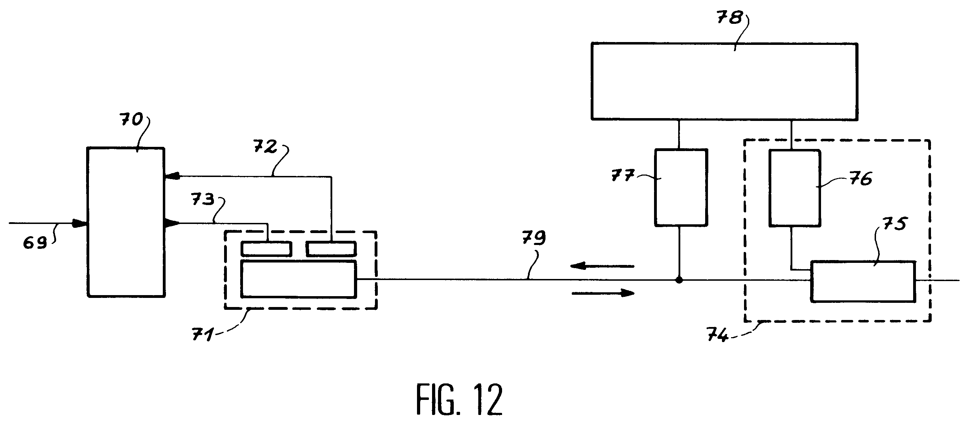

Cette coloration est basée sur la transposition optique. Cet étage détermine le niveau de parallélisme de l'affluent en le transposant sur une longueur d'onde déterminée, comme représenté sur la figure 12 qui illustre un étage de mise en forme des affluents.

Les paquets affluents sont ainsi affectés sur l'une des N positions de la matrice "trame": $N = M*P$ (M: nombre de fenêtres temporelles, P: nombre de longueurs d'ondes).

Cette figure 12 représente un affluent à 2 Mbit/s, 69, entrant dans une mémoire tampon 70, à laquelle est relié un laser à l'alternat 71 par une connexion lecture 72, et une connexion écriture 73. Ce laser 71 est relié également par l'intermédiaire d'une fibre optique 79 à un étage de transposition 74, comprenant un amplificateur 75 et un laser accordable 64 λ, 76, et à un laser 77. Un module 78 de sélection de la fenêtre temporelle Fj et de l'affectation λi est relié à cet étage de transposition 74 et à ce laser 77.

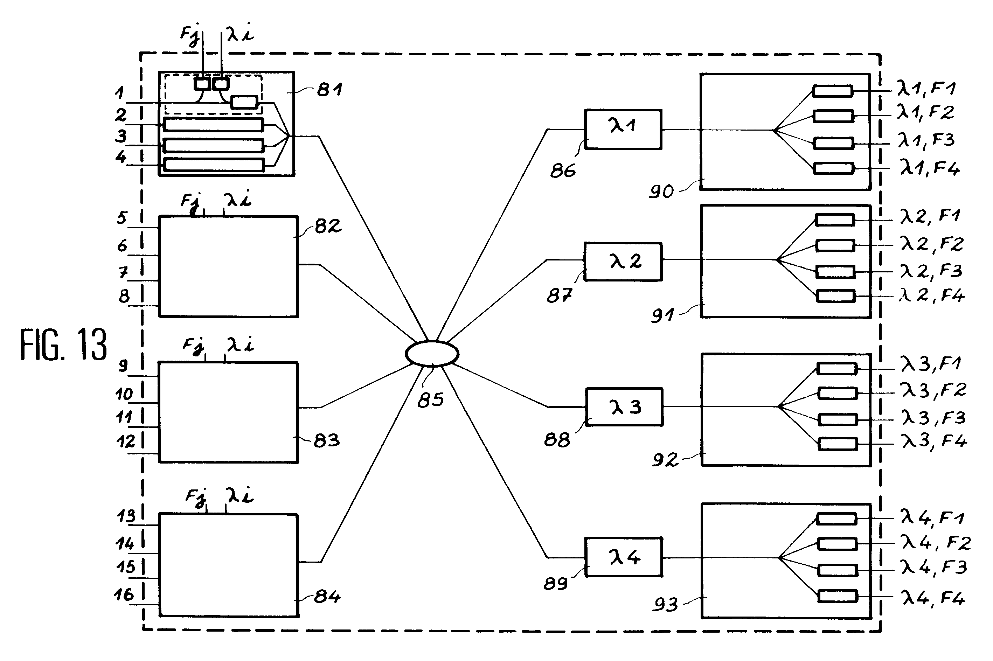

La figure 13 schématise la configuration d'une matrice 16 x 16, avec des modules 81, 82, 83 et 84 de coloration des affluents, un module 85 de transmission des données, des modules 86, 87, 88 et 89 d'affectation des longueurs d'ondes, et des modules 90, 91, 92 et 93 permettant le filtrage sélectif.

## Revendications

1. Procédé de transmission et d'aiguillage de paquets dans un réseau optique, caractérisé en ce que l'on réalise un multiplexage temporel synchrone, les paquets étant émis à une même vitesse, et le débit étant déterminé par le temps d'occupation de la ligne, et en ce que l'affectation des fenêtres temporelles se fait à partir d'un organe central, de façon à ce que tous les paquets se présentent aux bons instants au niveau d'une matrice de commutation.

2. Procédé selon la revendication 1, caractérisé en ce qu'on associe le parallélisme du multiplexage multicolore au multiplexage temporel synchrone, les paquets synchrones étant organisés dans une trame en "matrice" formée en abscisse des différents instants d'échantillonnage et en ordonnée des différentes longueurs d'onde représentant le niveau le parallélisme du paquet, chacun étant repéré dans ladite matrice par sa fenêtre d'échantillonnage et son niveau de parallélisme.

3. Procédé selon la revendication 2, caractérisé en ce qu'on réalise les trois opérations suivantes:
   - la coloration des affluents par transposition optique ;
   - le mélange des canaux ;
   - la sélection des canaux par filtrage.

4. Procédé selon la revendication 3, caractérisé en ce que pour réaliser la coloration des affluents, une fonction de transposition permet de transférer optiquement les informations d'une longueur d'onde à une autre, en utilisant l'une des techniques suivantes:
   - décalage de la fréquence d'émission d'un laser;
   - mélange à quatre ondes dans les amplificateurs semi-conducteurs;
   - non-linéarité du gain dans les amplificateurs semi-conducteurs;
   - commutation de gain dans les amplificateurs semi-conducteurs dans une boucle optique: synthétiseur/transpositeur.

5. Dispositif de transmission et d'aiguillage de paquets dans un réseau optique, caractérisé en ce qu'il comporte un transpositeur qui comprend les éléments suivants:
   - N coupleurs optiques 2 vers 1 (36, 37, 38 ou 39), l'une des branches de chaque coupleur recevant un affluent à λa, l'autre une émission continue d'un laser de "coloration" à λi, suivis de N amplificateurs optiques semi-conducteurs (41, 42, 43 ou 44), en sortie desquels on obtient le signal sur la longueur d'onde λa et son complément sur la longueur d'onde λi ;

- un mélangeur N vers 1 (45) ;
- une fibre optique (47);
- un coupleur 1 vers N (46) comportant sur chacune de ses sorties un filtre réjecteur (48, 49, 50, 51) qui élimine la longueur d'onde $\lambda$A.

6. Dispositif selon la revendication 5, caractérisé en ce qu'il comprend des synthétiseurs/transpositeur permettant de réaliser les deux fonctions d'un laser accordable et d'un amplificateur transpositeur, et en ce que chacun de ceux-ci comprend un amplificateur optique semi-conducteur (55) dont la réflectivité résiduelle des faces a été volontairement maintenue à une valeur telle qu'elle engendre une modulation du spectre de l'émission spontanée, placé dans une boucle en fibre optique (59) incluant un isolateur optique (56) et un filtre Fabry Perot accordable (57), cet ensemble formant un laser qui émet une longueur d'onde $\lambda_i(i=1$ à N) chaque fois que le filtre (57) est en coïncidence avec l'une quelconque des résonances de l'émission spontanée.

7. Dispositif selon la revendication 5, caractérisé en ce qu'il comprend une mémoire tampon (70) à laquelle est relié un laser à l'alternat (71) par une connexion lecture (72), et une connexion écriture (73), en ce que ce laser (71) est relié également par l'intermédiaire d'une fibre optique (78) à un étage de transposition (74), comprenant un amplificateur (75) et un laser accordable (64 $\lambda$, 76), et à un second laser (77), et en ce qu'un module (78) de sélection de la fenêtre temporelle Fi et de l'affectation $\lambda j$ est relié à cet étage de transposition (74) et à ce second laser (77).

FIG. 1A

FIG. 1B

FIG. 2A

FIG. 2B

FIG. 2C

EP 0 664 624 A2

FIG. 3A

FIG. 3B

FIG. 3C

EP 0 664 624 A2

FIG. 4A

FIG. 4B

FIG. 4C

12

FIG. 5A

FIG. 5B

EP 0 664 624 A2

FIG. 6

FIG. 7

FIG. 8 A

FIG. 8B

FIG. 9 A

FIG. 9B

FIG. 10

FIG. 11

EP 0 664 624 A2

FIG. 12

FIG. 13